# EUROPÄISCHE PATENTANMELDUNG

(11) **EP 4 528 964 A1**
(43) Veröffentlichungstag der Anmeldung: **26.03.2025**
(21) Anmeldenummer: 23199090.4
(22) Anmeldetag: 22.09.2023
(51) Int. Cl.: H02J 3/32, H02J 3/38

(54) **VERFAHREN ZUM BETRIEB EINES STROMNETZES**

(71) Anmelder: Viessmann Climate Solutions SE, 35108 Allendorf (Eder) (DE)
(72) Erfinder: KISNER, Viktor, 13353 Berlin (DE); PRITZKOLEIT, Max, 13347 Berlin (DE); ZIELONKA, Maciej, 80-288 Gdansk (PL)
(74) Vertreter: FDST Patentanwälte

(57) **Zusammenfassung**

Die Erfindung betrifft ein Verfahren (38) zum Betrieb eines Stromnetzes (2), das einen Gleichspannungskreis (12) und einen Wechselspannungskreis (4) aufweist, die elektrisch mittels eines Stromrichters (14) verbunden sind, wobei der Wechselspannungskreis (4) einen Versorgungsanschluss (6) zum Anschluss an ein Versorgungsnetz (8) aufweist, und wobei an den Gleichspannungskreis (12) ein Energiespeicher (20) sowie ein Stromerzeuger (16) angeschlossen sind. Eine prognostizierte Leistung (42) einer mittels des Stromerzeugers (16) bereitgestellten elektrischen Leistung wird für ein Zeitfenster (44) ermittelt, und ein Energiewert (52) wird ermittelt, der zu dem Anteil der oberhalb eines Leistungswerts (54) des Stromrichters (14) liegenden prognostizierten Leistung (42) korrespondiert. Ein gewünschter Ladezustand (56) des Energiespeichers (20) wird ermittelt, welcher zu einer maximal mittels des Energiespeichers (20) speicherbaren Energie (58) abzüglich des Energiewerts (52) korrespondiert. Der Energiespeicher (20) wird bis maximal zu dem gewünschten Ladezustand (56) geladen, wenn eine tatsächliche Leistung (62) des Stromerzeugers (16) kleiner als der Leistungswert (54) ist. Ferner betrifft die Erfindung ein Stromnetz (2), eine Steuereinheit (26) sowie ein Computerprogrammprodukt (36).

## Beschreibung

Die Erfindung betrifft ein Verfahren zum Betrieb eines Stromnetzes, das einen Gleichspannungskreis und einen Wechselspannungskreis aufweist, die elektrisch mittels eines Stromrichters verbunden sind. Ferner betrifft die Erfindung ein Stromnetz, eine Steuereinheit sowie ein Computerprogrammprodukt.

Privathaushalte weisen in zunehmendem Maße für den Eigenbedarf und/oder zum Einspeisen in ein Versorgungsnetz einen Stromerzeuger auf, der vorwiegend mit regenerativen/erneuerbaren Energien betrieben wird. Ein derartiger Stromerzeuger ist beispielsweise eine Photovoltaikanlage (PV-Anlage), bei der meist eine maximale Leistung unter 30 kW liegt. Wenn mittels der Photovoltaikanlage eine elektrische Leistung bereitgestellt wird, wird diese dann für den Eigenbedarf des Privathaushalts verwendet. Eine etwaige darüberhinausgehende Leistung wird meist in das Versorgungsnetz eingespeist. Mittels der Photovoltaikanlage wird dabei üblicherweise eine elektrische Gleichspannung bereitgestellt. Da die meisten Verbraucher des Privathaushalts sowie das Versorgungsnetz jedoch mit einer Wechselspannung arbeiten, ist es erforderlich, dass zwischen diese ein Stromrichter, der üblicherweise als Wechselrichter ausgestaltet ist, geschaltet ist, mittels dessen die (elektrische) Gleichspannung in eine (elektrische) Wechselspannung transformiert wird.

Wenn in einem Gebiet vergleichsweise viele derartige Privathaushalte vorhanden sind, ist es möglich, dass in das Versorgungsnetz mehr elektrische Leistung eingespeist wird, als ein Bedarf vorhanden ist. In diesem Fall wird von dem Betreiber des Versorgungsnetzes die Einspeisung begrenzt/limitiert, sodass eine Überlastung des Versorgungsnetzes vermieden wird. Jedoch wird dann nicht die vollständige, mittels der Photovoltaikanlage bereitgestellte oder bereitstellbare elektrische Leistung genutzt.

Um eine Effizienz und/oder Autarkie zu steigern weist daher zumindest ein Teil der Privathaushalte einen Energiespeicher auf, der beispielsweise als elektrochemischer Speicher ausgestaltet ist. Somit ist es möglich die mittels des Stromerzeugers bereitgestellte elektrische Leistung zum Laden des Energiespeichers zu verwenden, wenn ein Einspeisen in das Versorgungsnetz begrenzt/unterbunden ist, und wenn diese nicht von dem Privathaushalt selbst benötigt wird. Wenn mittels des Stromerzeugers keine elektrische Leistung bereitgestellt wird, beispielsweise nachts, kann dann die benötigte elektrische Leistung aus dem Energiespeicher bezogen werden, ohne dass diese von dem Versorgungsnetz abgerufen werden muss.

Hierbei ist es erforderlich, die einzelnen Bestandteile, nämlich den Energiespeicher, den Stromrichter sowie die Photovoltaikanlage sowie deren jeweilige Leistung und Effizienz aufeinander anzupassen. Üblicherweise ist eine Maximalleistung der Photovoltaikanlage größer als die des Stromrichters gewählt. Die Maximalleistung wird nämlich mittels der Photovoltaikanlage lediglich selten realisiert, da hierfür einerseits eine vergleichsweise hohe Sonneneinstrahlung vorhanden sein muss, also insbesondere keine Bewölkung oder dergleichen vorhanden sein darf. Andererseits ist hierfür ein vergleichsweise günstiger Einfallswinkel des Lichts auf die Photovoltaikanlage erforderlich, was jedoch meist lediglich für kurze Zeiträume der Fall ist. Aufgrund der verkleinerten Dimensionierung des Stromrichters können jedoch kostengünstigere Bauteile verwendet werden, die meist eine verbesserte Effizienz aufweisen. So ist üblicherweise ein Innenwiderstand von Halbleiterschaltern mit geringerer Stromtragfähigkeit verringert, weswegen ein Wirkungsgrad, insbesondere im Teillastbereich des Stromrichters, dann verbessert ist.

Der Erfindung liegt die Aufgabe zugrunde, ein besonders geeignetes Verfahren zum Betrieb eines Stromnetzes sowie ein besonders geeignetes Stromnetz als auch eine besonders geeignete Steuereinheit und ein besonders geeignetes Computerprogrammprodukt anzugeben, wobei vorteilhafterweise eine Effizienz erhöht ist.

Hinsichtlich des Verfahrens wird diese Aufgabe durch die Merkmale des Anspruchs 1, hinsichtlich des Stromnetzes durch die Merkmale des Anspruchs 8, hinsichtlich der Steuereinheit durch die Merkmale des Anspruchs 9 und hinsichtlich des Computerprogrammprodukts durch die Merkmale des Anspruchs 10 erfindungsgemäß gelöst. Vorteilhafte Weiterbildungen und Ausgestaltungen sind Gegenstand der jeweiligen Unteransprüche.

Das Verfahren dient dem Betrieb eines Stromnetzes. Das Stromnetz weist einen Gleichspannungskreis und einen Wechselspannungskreis auf. In dem Gleichspannungskreis wird eine elektrische Gleichspannung geführt, wohingegen in dem Wechselspannungskreis eine elektrische Wechselspannung geführt wird.

Mit anderen Worten weist der Wechselspannungskreis zumindest eine elektrische Phase auf, mittels derer ein zeitlich veränderliches elektrisches Potential geführt wird. Dieses ist insbesondere sinusförmig und weist eine bestimmte Frequenz und Amplitude auf. Vorzugsweise ist dabei die Frequenz 50 Hz oder 60 Hz, und die Amplitude beträgt 230 V oder 110 V. Geeigneterweise umfasst der Wechselspannungskreis mehr derartige Phasen, vorzugsweise drei und ist somit dreiphasig ausgestaltet. Dabei liegt an jeder der Phasen insbesondere ein sinusförmiges elektrisches Potential an. Insbesondere ist dabei die Frequenz und/oder Amplitude der jeweiligen elektrischen Potentiale gleich, jedoch sind diese zueinander verschoben, sodass zwischen diesen jeweils zweckmäßigerweise ein Phasenwinkel von 120° gebildet ist. Insbesondere weist der Wechselspannungskreis zudem ein Bezugs- oder Referenzpotential auf, beispielsweise Masse/Erde. Somit weist der Wechselspannungskreis ein zeitlich veränderliches elektrisches Potential auf, das insbesondere periodisch verändert ist, vorzugsweise sinusförmig.

Der Gleichspannungskreis und der Wechselspannungskreis sind mittels eines Stromrichters miteinander elektrisch verbunden. Dabei ist es mittels des Stromrichters möglich, elektrische Energie von einem der Kreise in den anderen Kreis zu überführen. Zum Beispiel ist der Stromrichter lediglich als Wechselrichter betreibbar, sodass mittels des Stromrichters elektrische Energie von dem Gleichspannungskreis in den Wechselspannungskreis transferiert werden kann. Vorzugsweise ist der Stromrichter auch rückspeisefähig ausgestaltet, sodass dieser auch als Gleichrichter betrieben werden kann. Somit ist es möglich, mittels des Stromrichters auch elektrische Energie von dem Wechselspannungskreis in den Gleichspannungskreis zu übertragen. Zumindest ist der Stromrichter als DC/AC-Wandler ausgestaltet oder kann in dieser Weise betrieben werden.

Der Stromrichter ist dabei beispielsweise auf die Topologie des Wechselspannungskreises angepasst, also insbesondere auf die Anzahl der Phasen. Zum Beispiel ist der Stromrichter dreiphasig ausgestaltet. Sofern der Stromrichter und der Wechselspannungskreis dreiphasig ausgestaltet sind, wird mittels des Stromrichters bei Übertragung von elektrischer Energie aus dem Gleichspannungskreis in den Wechselspannungskreis beispielsweise diese gleichmäßig auf sämtliche Phasen aufgeteilt oder lediglich oder vorwiegend auf eine der Phasen. Dies ist insbesondere geeignet ausgewählt. Alternativ hierzu ist der Stromrichter lediglich einphasig ausgestaltet. In diesem Fall ist beispielsweise der Wechselspannungskreis ebenfalls lediglich einphasig, oder der Stromrichter ist lediglich einer der Phasen des Wechselspannungskreises zugeordnet.

Der Stromrichter weist zweckmäßigerweise eine Brückenschaltung auf, insbesondere eine B6-Schaltung. Hierbei umfasst der Stromrichter eine Anzahl an Brückenzweigen. Falls der Stromrichter dreiphasig ausgestaltet ist, sind insbesondere drei derartige Brückenzweige vorhanden. Jeder der Brückenzweige weist dabei insbesondere zwei elektrisch in Reihe geschaltete Halbleiterschalter auf, vorzugsweise Feldeffekttransistoren, beispielsweise MOSFETs, GTOs, oder IGBTs. Sofern der Stromrichter einphasig ist, ist lediglich ein Brückenzweig oder ein einziger Schalter vorhanden.

Der Wechselspannungskreis weist einen Versorgungsanschluss zum Anschluss an ein Versorgungsnetz auf. Hierfür ist der Versorgungsanschluss geeignet sowie insbesondere vorgesehen und eingerichtet. Das Versorgungsnetz ist dabei kein Bestandteil des Stromnetzes, sondern es ist insbesondere möglich, mittels des Versorgungsnetzes über den Versorgungsanschluss das Stromnetz zu speisen oder beispielsweise elektrische Energie aus dem Stromnetz in das Versorgungsnetz zu übertragen. Zweckmäßigerweise ist das Versorgungsnetz dabei dreiphasig ausgestaltet. Insbesondere wird mittels des Versorgungsnetzes dabei eine elektrische Wechselspannung geführt, die beispielsweise 230 V oder 110 V beträgt. Insbesondere ist die Frequenz der Wechselspannung 50 Hz oder 60 Hz. Geeigneterweise weist der Versorgungsanschluss einen Stromzähler oder dergleichen auf, mittels dessen die zwischen dem Versorgungsnetz und dem Stromnetz übertragene elektrische Energie ermittelt werden kann.

Der Versorgungsanschluss stellt insbesondere einen Hausanschluss oder dergleichen dar, der zum Beispiel von einem Elektrizitätsversorger oder Betreiber des Versorgungsnetzes bereitgestellt ist. Das Stromnetz hingegen ist zweckmäßigerweise ein Bestandteil eines Gebäudes oder einer Wohnung. Das Stromnetz ist geeigneterweise ein Bestandteil eines Haushalts, wie eines Privathaushalts. Alternativ ist das Stromnetz ein Bestandteil einer landwirtschaftlichen Einheit oder einer Industrieanlage. Zumindest ist das Stromnetz bevorzugt einem oder mehreren lokalen Gebäudeeinheiten zugeordnet, also einem Zusammenschluss von einer begrenzten Anzahl an Gebäuden, wobei die Anzahl der Gebäude geringer als 10 ist. Vorzugsweise ist das Stromnetz vorgesehen und eingerichtet, höchstens eine elektrische Leistung von 500 kW, 300 kW, 200 kW, 100 kW oder weniger zu führen. Dahingegen können mittels des Versorgungsnetzes mehrere derartige lokale Gebäudeeinheiten/Haushalte versorgt werden, wofür dieses geeignet sowie vorgesehen und eingerichtet ist.

Das Stromnetz umfasst ferner einen Energiespeicher, der elektrisch an den Gleichspannungskreis angeschlossen ist. An dem Energiespeicher liegt somit bei Betrieb eine elektrische Gleichspannung an. Mittels des Energiespeichers ist es dabei möglich, elektrische Energie zu speichern. Der Energiespeicher umfasst vorzugsweise ein Steuergerät und eine Energiespeichereinheit, wobei mittels des Steuergeräts insbesondere die Energiespeichereinheit betrieben wird. Vorzugsweise wird mittels des Steuergeräts das Laden/Entladen der Energiespeichereinheit gesteuert/geregelt. Zum Beispiel weist die Energiespeichereinheit einzelne Baueinheiten, wie Module, auf, und mittels des Steuergeräts wird diejenige Baueinheit ausgewählt, in das elektrische Energie eingespeist oder das entladen werden soll. Der Stromrichter ist dabei vorzugsweise als sogenannter Hybrid-Wechselrichter ausgestaltet. Somit wird mittels des Stromrichters auch zumindest teilweise ein Laden/Entladen des Energiespeichers gesteuert/geregelt. Mit anderen Worten ist das etwaige Steuergerät zumindest teilweise mittels des Stromrichters gebildet. Vorzugsweise umfasst das Steuergerät einen Aufwärtswandler und/oder Abwärtswandler, mittels dessen insbesondere eine Anpassung einer mittels der Energiespeichereinheit bereitgestellten elektrischen Spannung auf die mittels des Gleichspannungskreises geführte elektrische Spannung erfolgen kann. Der Energiespeicher ist zum Beispiel ein Bestandteil eines Kraftfahrzeugs oder geeigneterweise immobil und/oder fest mit einem Gebäude verbunden.

Besonders bevorzugt ist der Energiespeicher ein elektrochemischer Speicher und somit insbesondere als eine Batterie ausgestaltet, vorzugsweise als eine Hochvoltbatterie. Die Energiespeichereinheit weist mehrere Batteriezellen auf, die zum Beispiel zu einzelnen Batteriemodulen zusammengefasst sind. Hierbei sind die einzelnen Batteriemodule zweckmäßigerweise zueinander baugleich. Die einzelnen Batteriezellen/Batteriemodule sind geeigneterweise zumindest teilweise elektrisch in Reihe und/oder parallelgeschaltet. Insbesondere handelt es sich bei dem Steuergerät somit um ein Batteriemanagementsystem. Mittels dessen erfolgt somit eine Auswahl der einzelnen Batteriezellen/Batteriemodule, sodass ein optimales Laden/Entladen des Energiespeichers erfolgt, wobei entstehende elektrische Verluste vorzugsweise reduziert sind.

Ferner weist das Stromnetz einen Stromerzeuger auf. Mittels des Stromerzeugers wird dabei ein elektrischer Strom bereitgestellt, also insbesondere eine elektrische Leistung. Dabei ist der bereitgestellte elektrische Strom insbesondere zeitlich veränderlich und insbesondere abhängig von Umweltbedingungen. Vorzugsweise ist der Stromerzeuger mit regenerativen/erneuerbaren Energien betrieben. Beispielsweise handelt sich beim Stromerzeuger um eine Windkraftanlage oder besonders bevorzugt um eine Photovoltaikanlage. Beispielsweise ist der Stromerzeuger damit jeweils gebildet. Alternativ hierzu umfasst der Stromerzeuger zum Beispiel mehrere Untereinheiten, von denen eine die Photovoltaikanlage ist. Zum Beispiel ist eine weitere der Untereinheiten die Windkraftanlage, sofern mittels dieser insbesondere eine elektrische Gleichspannung bereitgestellt wird. Bei einer weiteren Alternative ist der Stromerzeuger eine Brennstoffzelle oder umfasst zumindest diese. Der Stromerzeuger ist ebenfalls an den Gleichspannungskreis elektrisch angeschlossen, und mittels dessen wird eine elektrische Gleichspannung bereitgestellt. Diese ist beispielsweise konstant oder zeitlich veränderlich.

Bei dem Verfahren wird für ein Zeitfenster eine prognostizierte Leistung einer mittels des Stromerzeugers bereitgestellten elektrischen Leistung ermittelt. Mit anderen Worten wird eine Annahme für die mittels des Stromerzeugers während des Zeitfensters bereitgestellte elektrische Leistung getroffen. Insbesondere wird somit ein zeitlicher Verlauf der elektrischen Leistung erstellt. Das Zeitfenster befindet sich dabei in der Zukunft, beispielsweise zeitlich direkt anschließend, oder in einem bestimmten zeitlichen Abstand zum Zeitpunkt des Treffens der Prognose. Insbesondere wird zum Bestimmen der prognostizierten Leistung, die angenommene Leistung direkt ermittelt oder ein hierzu korrespondierender Wert, wie zum Beispiel ein mittels des Stromerzeugers bereitgestellter elektrischer Strom. Die prognostizierte Leistung wird insbesondere für unterschiedliche Zeitabschnitte des Zeitfensters erstellt. Dabei wird für jeden der Zeitabschnitte insbesondere eine konstante prognostizierte Leistung angenommen, was einen Aufwand verringert. Zweckmäßigerweise ist die Länge der Zeitabschnitte konstant, und das Zeitfenster ist somit in die Zeitabschnitte unterteilt. Beispielsweise ist die Länge eines der Zeitabschnitte zwischen 1 Minute und einer halben Stunde, vorzugsweise zwischen 5 Minuten und 20 Minuten oder insbesondere zwischen 10 Minuten oder 15 Minuten. Somit ist es möglich, bei der Prognose unterschiedliche Umwelteinflüsse vergleichsweise genau zu berücksichtigen, wobei ein Aufwand verringert ist.

In einem nachfolgenden Arbeitsschritt wird ein Energiewert ermittelt. Der Energiewert korrespondiert dabei zu dem Anteil der oberhalb eines Leistungswerts des Stromrichters liegenden prognostizierten Leistung. Der Energiewert wird somit ebenfalls für das Zeitfenster erstellt, und vorzugsweise wird für die einzelnen Zeitabschnitte überprüft, ob die prognostizierte Leistung oberhalb des Leistungswerts ist. Sofern dies der Fall ist, wird zu dem Energiewert geeigneterweise das Produkt aus der Länge des Zeitabschnitts und der Differenz zwischen der prognostizierten Leistung und dem Leistungswert addiert. Insbesondere entspricht die auf diese Weise erstellte Summe dem Energiewert. Sofern die prognostizierte Leistung für einen der Zeitabschnitte unterhalb des Leistungswerts ist, wird der Energiewert insbesondere für diesen Zeitabschnitt nicht verändert. Bei einer Weiterbildung wird zum Beispiel anstatt der Summation eine Integration durchgeführt, was eine Genauigkeit erhöht. Bei einer alternativen Vorgehensweise wird zum Erstellen des Energiewerts ein mathematisches Modell verwendet und/oder beispielsweise ein Optimierungsverfahren herangezogen. Somit ist eine Robustheit erhöht, wobei aufgrund des Optimierungsverfahrens ein genaues Formulieren des Problems nicht erforderlich ist, und die Ermittlung des Energiewerts somit mit vergleichsweise geringen Hardwareressourcen durchgeführt werden kann, auch wenn beispielsweise eine Zeitdauer (geringfügig) verlängert ist und/oder eine Genauigkeit (geringfügig) verringert ist. Unabhängig von dem verwendeten Verfahren wird zum Beispiel der jeweils erstellte Wert direkt als Energiewert verwendet. Bei einer Weiterbildung erfolgt zudem noch eine Weiterbearbeitung, beispielsweise eine Multiplikation mit einem bestimmten Faktor, mittels dessen beispielsweise Verluste des Stromrichters berücksichtigt werden.

Der Leistungswert des Stromrichters ist vorzugsweise konstant, oder beispielsweise abhängig von aktuellen Gegebenheiten. Insbesondere entspricht der Leistungswert einer Maximalleistung des Stromrichters oder vorzugsweise einer Nennleistung des Stromrichters, also der Leistung, für dessen Betrieb der Stromrichter ausgelegt ist. Alternativ hierzu korrespondiert der Leistungswert zu einem Betriebspunkt, bei dem entstehende Verluste minimal oder ein Wirkungsgrad maximal ist. Insbesondere korrespondiert der Leistungswert somit zu einem optimalen Betriebspunkt des Stromrichters. Der Leistungswert ist zum Beispiel von einem Hersteller des Stromrichters vorgegeben oder wird anhand von Betriebsdaten des Stromrichters ermittelt, sodass eine Alterung/Erwärmung oder sonstige Parameter berücksichtigt werden.

Zusammenfassend korrespondiert der Energiewert zu dem Anteil der prognostizierten Energie, die während des Zeitfensters, insbesondere aufgrund einer Beschränkung des Stromrichters, nicht mittels des Stromrichters in den Wechselspannungskreis eingespeist werden kann.

In einem nachfolgenden Arbeitsschritt wird ein gewünschter Ladezustand des Energiespeichers ermittelt. Der Ladezustand korrespondiert dabei zu einer maximal mittels des Energiespeichers speicherbaren Energie abzüglich des Energiewerts. Insbesondere entspricht dabei der gewünschte Ladezustand dem Verhältnis aus dieser Differenz und der maximal mittels des Energiespeichers speicherbaren Energie. Die maximal mittels des Energiespeichers speicherbare Energie ist hierbei insbesondere anhand einer Konstruktion des Energiespeichers vorgegeben. Beispielsweise wird diese während des Betriebs des Stromnetzes als konstant angenommen. Alternativ hierzu wird diese zumindest zu bestimmten Zeitpunkten angepasst, wobei geeigneterweise Alterungseffekte, Umwelteffekte und/oder Betriebsdaten des Energiespeichers berücksichtigt werden. Geeigneterweise erfolgt eine entsprechende Anpassung beispielsweise jedes Jahr oder jedes halbe Jahr. Somit ist ein Aufwand vergleichsweise gering.

In einem nachfolgenden Arbeitsschritt wird der Energiespeicher bis maximal zu dem gewünschten Ladezustand geladen, wenn eine tatsächliche Leistung des Stromerzeugers kleiner als der Leistungswert ist. Dieser Arbeitsschritt wird somit während des Zeitfensters durchgeführt, und während des Zeitfensters wird folglich die mittels des Stromerzeugers tatsächlich bereitgestellte (elektrische) Leistung ermittelt. Sofern die Prognose vergleichsweise genau war, entspricht die prognostizierte Leistung der tatsächlichen Leistung, insbesondere für jeden oder zumindest einen Großteil der Zeitabschnitte. Zusammenfassend wird die tatsächliche mittels des Stromerzeugers bereitgestellte elektrische Leistung ermittelt und als die tatsächliche Leistung verwendet. Hierbei erfolgt somit eine Begrenzung der mittels des Energiespeichers gespeicherten elektrischen Energie, solange der Stromrichter unterhalb des Leistungswerts betrieben wird.

Aufgrund des Verfahrens wird somit, solange der Stromrichter unterhalb des Leistungswerts betrieben wird, in dem Energiespeicher eine Kapazität freigehalten. Falls sich somit die aktuellen Gegebenheiten ändern, kann flexibel hierauf reagiert werden. Zusammenfassend ist somit mittels des Energiespeichers eine Pufferkapazität bereitgestellt, die bei Bedarf genutzt werden kann, wobei es möglich ist, den Stromrichter über einen vergleichsweisen langen Zeitraum während des Zeitfensters mittels des Leistungswerts zu betreiben. Somit ist eine Effizienz erhöht. Dabei ist eine Überbelastung des Stromrichters und des Energiespeichers vermieden. Hierbei wird insbesondere, solange das Zeitfenster andauert, der Energiespeicher bis maximal zu dem gewünschten Ladezustand geladen.

Zweckmäßigerweise wird während des Verfahrens der Stromrichter betrieben, sodass mittels dessen elektrische Energie von dem Gleichspannungskreis in den Wechselspannungskreis überführt wird. Solange dabei der Energiespeicher nicht geladen wird und die tatsächliche Leistung geringer als der Leistungswert ist, entspricht die mittels des Stromrichters bereitgestellte, also in den Wechselspannungskreis eingespeiste, Leistung im Wesentlichen der mittels des Stromerzeugers bereitgestellten Leistung, also der tatsächlichen Leistung, abzüglich etwaiger Verluste aufgrund des Betriebs des Stromrichters.

Wenn die tatsächliche Leistung des Stromerzeugers größer als der Leistungswert ist, wird insbesondere der Energiespeicher geladen. Somit wird vermieden, dass eine Erzeugungsleistung des Stromerzeugers begrenzt wird. Falls der Energiespeicher noch nicht bis zu dem gewünschten Ladezustand geladen wurde, erfolgt insbesondere ein Laden bis dahin. Falls, wenn die tatsächliche Leistung des Stromerzeugers größer als der Leistungswert ist, der Energiespeicher bereits den gewünschten Ladezustand aufweist, wird der gewünschte Ladezustand zweckmä-ßigerweise angehoben/angepasst. Dies erfolgt geeigneterweise auch, wenn der gewünschte Ladezustand erreicht wird, solange die tatsächliche Leistung des Stromerzeugers größer als der Leistungswert ist. Der gewünschte Ladezustand wird dabei vorzugsweise iterativ angepasst/nachgeführt.

Zum Beispiel wird der gewünschte Ladezustand dann theoretisch ermittelt, wofür der Anteil der tatsächlichen Leistung oberhalb des Leistungswerts zeitlich integriert oder mit der Länge der jeweiligen Zeitabschnitte multipliziert wird. Vorzugsweise erfolgt dabei die Anpassung des gewünschten Ladezustands in bestimmten Zeitfenstern. Das Zeitfenster ist dabei zum Beispiel größer als 5 Sekunden und geeigneterweise kleiner als 1 Minute oder 30 Sekunden. Zweckmäßigerweise beträgt das Zeitfenster 10 Sekunden.

Alternativ wird, solange die tatsächliche Leistung des Stromerzeugers größer als der Leistungswert ist, der Stromrichter in gewünschter Weise betrieben, wobei die ansonsten zur Verfügung stehende elektrische Energie in den Energiespeicher überführt wird. Wenn die tatsächliche Leistung unter den Leistungswert sinkt, wird das Laden des Energiespeichers beendet. Der dann aktuelle Ladezustand wird zweckmäßigerweise nachfolgend als neuer gewünschter Ladezustand herangezogen. Der Energiespeicher wird dabei lediglich mit dem Anteil der erzeugten Leistung geladen, der sonst aufgrund der Leistungsgrenze des Stromrichters verlorenginge.

Beispielsweise wird, wenn die tatsächliche Leistung des Stromerzeugers größer als der Leistungswert ist, der Stromrichter mit einer bestimmten Leistung betrieben, die geringer als der Leistungswert ist. Besonders bevorzugt jedoch wird der Stromrichter mit dem Leistungswert betrieben. Somit wird, wenn die tatsächliche Leistung größer als der Leistungswert ist, die über den Leistungswert hinausgehende, mittels des Stromerzeugers bereitgestellte elektrische Leistung in dem Energiespeicher gespeichert, wohingegen die zu dem Leistungswert korrespondierende elektrische Leistung mittels des Stromrichters in den Wechselspannungskreis eingespeist wird. Da in dem Energiespeicher aufgrund der bis dahin geltenden Begrenzung auf den gewünschten Ladezustand genug Kapazität vorhanden ist, kann somit die im Wesentlichen vollständige, mittels des Stromerzeugers bereitgestellte elektrische Energie verwendet werden, weswegen eine Effizienz und ein Wirkungsgrad vergrößert sind. Hierbei ist eine Überlastung des Energiespeichers und des Stromrichters ausgeschlossen. Auch ist es dabei möglich, einen vergleichsweise klein dimensionierten Stromrichter zu verwenden, ohne dass eine bereitgestellte elektrische Energie nicht genutzt würde. Zusammenfassend wird somit aufgrund des Verfahrens mittels des Energiespeichers ausreichend Kapazität vorgehalten, um bei einer Maximalleistung des Stromerzeugers, insbesondere während einer sogenannten Spitzenzeit, die dann bereitgestellte elektrische Energie, die mittels des Stromrichters nicht in den Wechselspannungskreis überführt werden kann, zu speichern. Somit ist eine Effizienz erhöht, wobei Anforderungen an die Hardware des Stromkreises verringert sind.

Beispielsweise wird die vollständige elektrische Energie, die mittels des Stromrichters bereitgestellt wird, über den Versorgungsanschluss in das Versorgungsnetz eingespeist. Alternativ hierzu existiert beispielsweise eine Leistungsbegrenzung für den Versorgungsanschluss, die beispielsweise konstant oder zeitlich variabel ist. Insbesondere entspricht die Leistungsbegrenzung einer Einspeisebegrenzung, die zum Beispiel von einem Betreiber des Versorgungsnetzes vorgegeben ist. Falls die mittels des Stromrichters in den Wechselspannungskreis eingespeiste Leistung, die insbesondere zu der tatsächlichen Leistung des Stromerzeugers oder, wenn diese größer als der Leistungswert ist, zu dem Leistungswert korrespondiert, größer als die für den Versorgungsanschluss geltende Leistungsbegrenzung ist, wird der Stromrichter mit verringerter Leistung betrieben. Insbesondere wird dabei der Stromrichter mit dem Wert der Leistungsbegrenzung betrieben, insbesondere sofern keine sonstige Entnahme von elektrischer Energie aus dem Wechselspannungskreis erfolgt. Falls dies der Fall ist, erfolgt insbesondere ein Betrieb mit der Leistungsbegrenzung zuzüglich der anderweitig in dem Wechselspannungskreis benötigten elektrischen Leistung. Somit wird der Stromrichter gedrosselt betrieben, und die deswegen in dem Gleichstromkreis vorhandene elektrische Leistung wird zum Laden des Energiespeichers verwendet.

Hierbei wird insbesondere der Energiespeicher bis zu dem gewünschten Ladezustand geladen. Falls der Energiespeicher bereits den gewünschten Ladezustand erreicht hat, erfolgt zweckmäßigerweise ein Anheben des Ladezustands, oder insbesondere wird die Begrenzung aufgehoben, solange der Stromrichter aufgrund der Leistungsbegrenzung mit verringerter Leistung betrieben wird. Wenn die Leistungsbegrenzung aufgehoben wird oder die tatsächliche Leistung des Stromerzeugers geringer als die Leistungsbegrenzung ist, wird insbesondere das Laden des Energiespeichers beendet, und der dann vorhandene Ladezustand des Energiespeichers wird im Weiteren als gewünschter Ladezustand verwendet. Somit wird die mittels des Stromerzeugers bereitgestellte elektrische Leistung stets verwendet, auch wenn beispielsweise aufgrund von aktuellen Umständen ein Einspeisen in das Versorgungsnetz nicht möglich ist, auch wenn der Stromrichter noch nicht mit dessen Leistungswert betrieben wird. Somit ist eine Effizienz weiter vergrößert.

Beispielsweise weist der Stromkreis einen Verbraucher auf, der elektrisch an den Wechselspannungskreis angeschlossen ist. Zumindest ist es jedoch möglich, an den Wechselspannungskreis einen Verbraucher anzuschließen. Hierbei ist der Verbraucher zum Beispiel mittels lediglich einer einzigen Einheit gebildet. Alternativ hierzu umfasst der Verbraucher mehrere einzelne Einheiten, die jedoch zum Beispiel in keinem weiteren Zusammenhang zueinanderstehen, außer dass diese mittels des Wechselspannungskreises bestromt und/oder betrieben sind. Beispielsweise dient dabei zumindest eine der Einheiten der Erhöhung eines Komforts eines Nutzers des Stromkreises. Geeigneterweise ist eine der Einheiten eine Wärmepumpe, die insbesondere der Erwärmung der baulichen Einheit dient, die den Stromkreis aufweist. Alternativ oder in Kombination hierzu ist zum Beispiel eine der Einheiten eine Klimaanlage oder eine sogenannte Wallbox.

Das Einspeisen von elektrischer Energie/Leistung in das Versorgungsnetz erfolgt dabei vorzugsweise lediglich dann, wenn zumindest ein gewünschter Betrieb des Verbrauchers mittels der in dem Wechselspannungskreis vorhandenen Energie ermöglicht ist. Falls beispielsweise die tatsächliche Leistung des Stromerzeugers für den Betrieb des Verbrauchers nicht ausreicht, wird zusätzliche elektrische Leistung aus dem Versorgungsnetz bezogen, sodass ein gewünschter Betrieb des Verbrauchers ermöglicht ist. Alternativ oder in Kombination hierzu wird beispielsweise der Energiespeicher entladen und auf diese Weise mittels des Stromrichters der Wechselspannungskreis gespeist, sodass der Verbraucher betrieben werden kann.

Bei dem Verfahren wird bevorzugt die von dem Verbraucher benötigte Leistung ermittelt. Sofern beispielsweise mittels des Stromerzeugers keine tatsächliche Leistung realisiert wird, oder diese zu gering für den Betrieb des Verbrauchers ist, wird vorzugsweise der Energiespeicher entladen und auf diese Weise elektrische Energie für den Betrieb des Stromrichters bereitgestellt, mittels dessen der Wechselspannungskreis gespeist wird. Dabei wird der Stromrichter vorzugsweise mit dem Wert für die benötigte Leistung oder einem geringfügig darüber erhöhten Wert betrieben, sodass etwaige Verluste ausgeglichen werden können. Somit ist ein Betrieb des Verbrauchers ermöglicht, wobei der Energiespeicher zumindest teilweise entladen wird, und wobei ein Bezug von elektrischer Energie aus dem Versorgungsnetz nicht erforderlich ist.

Beispielsweise wird der Energiespeicher unabhängig von der benötigten Leistung geladen. Besonders bevorzugt jedoch wird der Energiespeicher lediglich geladen, wenn die tatsächliche Leistung größer als die benötigte Leistung ist. Insbesondere werden dabei etwaige elektrische Verluste berücksichtigt, die aufgrund des Betriebs des Stromrichters entstehen, und die benötigte Leistung wird entsprechend korrigiert. Somit wird bei dem Verfahren zunächst der Betrieb des Verbrauchers sichergestellt, und erst im Anschluss hieran, mit niedrigerer Priorität, wird der Energiespeicher geladen. Auf diese Weise ist ein Bezug von elektrischer Energie aus dem Versorgungsnetz lediglich selten erforderlich, wobei mittels des Energiespeichers eine vergleichsweise großer Pufferkapazität bereitgehalten wird. Falls die benötigte Leistung und die tatsächliche Leistung größer als der Leistungswert sind, wird der Stromrichter mit dem Leistungswert betrieben, und zudem der Energiespeicher geladen. Die für den Betrieb des Verbrauchers benötigte zusätzliche Leistung/Energie wird dann vorzugsweise über den Versorgungsanschluss aus dem Versorgungsnetz abgerufen. Aufgrund eines derartigen Vorgehens ist sichergestellt, dass möglichst wenig Energie aus dem Versorgungsnetz abgerufen wird, sodass eine Autarkie des Stromnetzes vergrößert ist.

Beispielsweise wird lediglich einmalig die prognostizierte Leistung ermittelt, vorzugsweise vor Beginn des Zeitfensters. Alternativ hierzu wird die prognostizierte Leistung während des Zeitfensters angepasst, beispielsweise kontinuierlich oder in bestimmten zeitlichen Abständen, zum Beispiel jede Stunde, alle 15 Minuten, alle 5 Minuten, oder alle 10 Sekunden. In Abhängigkeit der jeweils angepassten prognostizierten Leistung wird dabei zweckmäßigerweise auch der gewünschten Ladezustand entsprechend angepasst. Infolgedessen werden beispielsweise Fehler bei der Erstellung der Prognose, die sich aufgrund von geänderten Umweltbedingungen ergeben haben, zügig ausgeglichen, sodass nachfolgend ein gewünschter Betrieb des Energiespeichers und des Stromrichters ermöglicht ist. Daher ist trotz der zunächst vergleichsweise großen Ungenauigkeit dennoch eine Effizienz vergleichsweise groß.

Beispielsweise wird als Zeitfenster eine Woche oder 1 Stunde gewählt. Besonders bevorzugt weist das Zeitfenster eine Länge zwischen 6 Stunden und 72 Stunden auf, und insbesondere ist die Länge gleich 12 Stunden oder 24 Stunden. Bei einer derartigen Länge des Zeitfensters stimmt die prognostizierte Leistung hinreichend genau mit der tatsächlichen Leistung überein, sodass ein vergleichsweise effizienter Betrieb des Stromnetzes ermöglicht ist. Auch ist auf diese Weise ein Aufwand verringert. Zudem unterscheidet sich die tatsächliche Leistung aufeinanderfolgende Tage vergleichsweise gering, sodass das Erstellen der Prognose erleichtert ist. Insbesondere ist die Länge der etwaigen Zeitabschnitte zwischen 10 Minuten und 20 Minuten und beispielsweise gleich 15 Minuten. Insbesondere wird hierbei für alle 15 Minuten ein gewünschter Ladezustand ermittelt und/oder ein Wert für die prognostizierte Leistung erstellt.

Vorzugsweise wird zum Ermitteln der prognostizierten Leistung ein "künstliche Intelligenz"-Algorithmus (KI) verwendet, insbesondere maschinelles Lernen oder ein neuronales Netz. Beispielsweise wird die prognostizierte Leistung anhand eines theoretischen Modells ermittelt. Zweckmäßigerweise wird die prognostizierte Leistung anhand von realisierten tatsächlichen Leistungen ermittelt. Hierfür werden beispielsweise die tatsächlichen Leistungen für eine Anzahl an vorhergehenden Zeitfenstern verwendet und beispielsweise der Mittelwert hieraus als prognostizierte Leistung herangezogen. Zum Beispiel erfolgt dabei eine unterschiedliche Gewichtung der einzelnen tatsächlichen Leistungen. Bei einer Alternative wird die prognostizierte Leistung vorzugsweise mittels einer Spline-Interpolation aus den tatsächlichen Leistungen ermittelt. Die Anzahl der tatsächlich herangezogenen Zeitfenster ist dabei beispielsweise geringer als 10 und vorzugsweise größer als 2. Somit ist ein Aufwand verringert.

Vorzugsweise wird die prognostizierte Leistung mittels einer Spline-Interpolation ermittelt, wobei insbesondere die Mittelwerte der tatsächlichen Leistung aus einem zeitlich direkt vorhergehenden Zeitbereich verwendet werden. Die Länge des Zeitbereichs beträgt geeigneterweise zwischen 1 Minute und 30 Minuten und vorzugsweise zwischen 10 Minuten und 20 Minuten und ist zweckmäßigerweise gleich 15 Minuten. Vorzugsweise wird hierfür die tatsächliche Leistung alle 10 Sekunden abgetastet. Anhand dieser ermittelten Werte wird die prognostizierte Leistung für einen weiteren Zeitbereich, der sich zweckmäßigerweise direkt anschließt, erstellt. Geeigneterweise ist dabei die Länge des weiteren Zeitbereichs zwischen 30 Minuten und 2 Stunden und beispielsweise gleich 1 Stunde.

Alternativ oder in Kombination hierzu wird die prognostizierte Leistung anhand einer Prognose für das Wetter ermittelt. Hierbei wird die Prognose beispielsweise während des Verfahrens erstellt, oder diese wird aus einer externen Quelle abgerufen, vorzugsweise über das Internet. Beispielsweise wird dabei anhand von Wetterdaten die prognostizierte Leistung ermittelt, oder es werden bereits verarbeitete Wetterdaten, wie zum Beispiel eine Strahlungsstärke abgerufen, und anhand dessen die prognostizierte Leistung ermittelt. Somit ist eine Genauigkeit beim Ermitteln der prognostizierten Leistung vergrößert, wobei ein Wissen um spezielle meteorologische Modelle nicht erforderlich ist. Sofern der Stromerzeuger mittels einer Photovoltaikanlage gebildet ist oder diese umfasst, erfolgt dabei insbesondere ein Abrufen einer Strahlungsprognose von einem Wetterdienst. Auf diese Weise werden Umweltbedingungen berücksichtigt, die sich auf den Betrieb des Stromerzeugers auswirken.

Das Stromnetz weist einen Gleichspannungskreis auf, an den ein Energiespeicher sowie ein Stromerzeuger elektrisch angeschlossen sind. Der Stromerzeuger ist insbesondere mittels regenerativer oder erneuerbarer Energien betrieben. Dabei ist die mittels des Stromerzeugers bereitgestellte tatsächliche Leistung insbesondere nicht zeitlich konstant, sondern abhängig von Umweltbedingungen. Zum Beispiel ist der Stromerzeuger mittels einer Photovoltaikanlage gebildet oder umfasst zumindest diese. Der Energiespeicher weist geeigneterweise ein Steuergerät und eine Energiespeichereinheit auf. Zweckmäßigerweise umfasst die Energiespeichereinheit einen elektrochemischen Energiespeicher, wie eine Batterie.

Das Stromnetz umfasst ferner einen Wechselspannungskreis, der mittels eines Stromrichters elektrisch mit dem Gleichspannungskreis verbunden ist. Zweckmä-ßigerweise ist hierbei der Stromrichter als ein sogenanntes Hybrid-Wechselrichter ausgestaltet, und mittels dessen wird zum Beispiel zumindest teilweise der Energiespeicher betrieben. Der Wechselspannungskreis ist vorzugsweise dreiphasig ausgestaltet, und mittels dessen wird bei Betrieb ein dreiphasiger Wechselstrom geführt. Hierbei ist die Amplitude jeder der elektrischen Phasen zweckmäßigerweise gleich und zum Beispiel 230 V oder 110 V. Das mittels jeder der Phasen geführte elektrische Potential weist dabei eine Frequenz von 50 Hz oder 60 Hz auf. Insbesondere ist der Verlauf des elektrischen Potentials jeder Phase sinusförmigen, und die elektrischen Potentiale der einzelnen Phasen sind vorzugsweise zueinander um 120° verschoben.

Der Wechselspannungskreis weist einen Versorgungsanschluss zum Anschluss an ein Versorgungsnetz auf. Hierfür ist der Versorgungsanschluss, der zum Beispiel auch als "Point of Common Coupling" (PCC) oder Hausanschluss bezeichnet ist, geeignet, insbesondere vorgesehen und eingerichtet. Geeigneterweise ist es somit möglich zwischen dem Versorgungsnetz und dem Stromnetz elektrische Energie zu transferieren, wobei insbesondere ein elektrischer Strom zwischen diesen fließt. Zweckmäßigerweise ist die elektrische Spannung in dem Versorgungsnetz gleich der elektrischen Spannung in dem Wechselspannungskreis.

Das Stromnetz ist gemäß einem Verfahren betrieben, bei dem eine prognostizierte Leistung einer mittels des Stromerzeugers bereitgestellten elektrischen Leistung für ein Zeitfenster erstellt wird. Es wird ein Energiewert ermittelt, der zu dem Anteil der oberhalb eines Leistungswerts des Stromrichters liegenden prognostizierten Leistung korrespondiert, und ein gewünschter Ladezustand des Energiespeichers wird ermittelt, welcher zu einer maximal mittels des Energiespeichers speicherbaren Energie abzüglich des Energiewerts korrespondiert. Der Energiespeicher wird bis maximal zu dem gewünschten Ladezustand geladen, wenn eine tatsächliche Leistung des Stromerzeugers kleiner als der Leistungswert ist.

Das Stromnetz weist insbesondere eine Steuereinheit auf, die vorgesehen und eingerichtet ist, das Verfahren durchzuführen. Die Steuereinheit umfasst beispielsweise einen anwendungsspezifischen Schaltkreis (ASIC) oder besonders bevorzugt einen Computer, der geeigneterweise programmierbar ausgestaltet ist. Insbesondere umfasst die Steuereinheit ein Speichermedium, auf dem ein Computerprogrammprodukt, das auch als Computerprogramm bezeichnet ist, gespeichert ist, wobei bei Ausführung dieses Computerprogrammprodukts, also des Programms, der Computer veranlasst wird, das Verfahren durchzuführen. Zweckmä-ßigerweise ist die Steuereinheit mit dem Stromerzeuger, dem Energiespeicher und/oder dem Stromrichter signaltechnisch verbunden, vorzugsweise mittels eines entsprechenden Anschlusses der Steuereinheit. Vorzugsweise werden hierbei der Stromrichter und/oder der Energiespeicher entsprechend des Verfahrens gesteuert und/oder geregelt. Insbesondere ist mittels der Steuereinheit, des Stromerzeugers, des Energiespeichers und/oder des Stromrichters zumindest teilweise ein Kommunikationsnetzwerk gebildet, das zum Beispiel nach Art eines Bussystems ausgestaltet ist.

Die Steuereinheit ist beispielsweise ein separates Bauteil, oder zum Beispiel in den Energiespeicher integriert, und mittels dieser wird beispielsweise eine Steuerung/Regelung einer Ladung/Entladung des Energiespeichers durchgeführt. Insbesondere ist mittels der Steuereinheit somit das etwaige Steuergerät des Energiespeichers gebildet. In einer Weiterbildung ist die Steuereinheit zum Beispiel in den Stromrichter und/oder den Stromerzeuger integriert. Beispielsweise werden somit mittels der Steuereinheit noch weitere Funktionen durchgeführt und/oder übernommen, wie das Anpassen des Stromrichters auf eine Frequenz und/oder Phasenlage der mittels des Wechselspannungskreises geführten elektrischen Wechselspannung. Insbesondere erfolgt hierbei mittels der Steuereinheit ein Ermitteln der etwaigen Prognose für das Wetter und/oder das Abrufen der Prognose aus einer externen Quelle. Die Steuereinheit ist zweckmäßigerweise geeignet, insbesondere vorgesehen und eingerichtet, mit einem Netzwerk signaltechnisch verbunden zu werden, insbesondere dem Internet.

Der Stromrichter ist beispielsweise lediglich als Wechselrichter ausgestaltet, sodass mittels dessen lediglich ein Energietransfer von dem Gleichspannungskreis in den Wechselspannungskreis ermöglicht ist. Alternativ hierzu ist dieser auch rückspeisefähig ausgestaltet, und somit insbesondere auch als Gleichrichter betreibbar. Insbesondere ist der Stromrichter einphasig, weswegen Herstellungskosten reduziert sind. Zweckmäßigerweise ist der Stromrichter jedoch mehrphasig, vorzugsweise dreiphasig. Geeigneterweise korrespondiert die Anzahl der Phasen des Stromrichters zu der Anzahl an Phasen des Wechselspannungskreises. Sofern mittels des Stromrichters elektrische Leistung/Energie von dem Gleichspannungskreis in den Wechselspannungskreis übertragen wird, wird diese zum Beispiel in sämtliche Phasen oder lediglich in eine bestimmte Phase eingespeist. Die Phase wird vorzugsweise mittels eines Algorithmus ausgewählt. Geeigneterweise wird dabei diejenige Phase ausgewählt, bei der beispielsweise ein Leistungsbedarf von etwaigen an den Wechselspannungskreis angeschlossenen Verbraucher am höchsten ist, und/oder bei dem beispielsweise ein Leistungsbedarf des Versorgungsnetzes am größten ist.

Die Steuereinheit weist einen Anschluss zur signaltechnischen Verbindung mit einem Stromrichter und/oder einem Energiespeicher auf. Beispielsweise ist dabei der Anschluss nach Art eines Steckers ausgebildet und erfüllt insbesondere einen bestimmten Standard. Hierbei ist es möglich, den Anschluss signaltechnisch und elektrisch mit einer Leitung zu verbinden. Alternativ hierzu ist der Anschluss mittels einer Funkeinrichtung gebildet, die zum Beispiel einen bestimmten Standard erfüllt, beispielsweise einen Mobilfunk-, WLAN- oder Bluetooth-Standard. Zumindest ist es aufgrund des Anschlusses möglich, Informationen/Signale/Daten zwischen der Steuereinheit und dem Stromrichter und/oder zwischen der Steuereinheit und dem Energiespeicher auszutauschen. Beispielsweise ist dabei der Anschluss lediglich unidirektional oder vorzugsweise bidirektional ausgestaltet.

Die Steuereinheit ist vorgesehen und eingerichtet, ein Verfahren zum Betrieb eines Stromnetzes durchzuführen, das einen Gleichspannungskreis und einen Wechselspannungskreis aufweist, die elektrisch mittels eines Stromrichters verbunden sind, wobei der Wechselspannungskreis einen Versorgungsanschluss zum Anschluss an ein Versorgungsnetz aufweist, und wobei an den Gleichspannungskreis ein Energiespeicher sowie ein Stromerzeuger angeschlossen sind. Bei dem Verfahren wird eine prognostizierte Leistung einer mittels des Stromerzeugers bereitgestellten elektrischen Leistung für ein Zeitfenster ermittelt. Es wird ein Energiewert ermittelt, der zu dem Anteil der oberhalb eines Leistungswerts des Stromrichters liegenden prognostizierten Leistung korrespondiert, und ein gewünschter Ladezustand des Energiespeichers wird ermittelt, welcher zu einer maximal mittels des Energiespeichers speicherbaren Energie abzüglich des Energiewerts korrespondiert. Der Energiespeicher wird bis maximal zu dem gewünschten Ladezustand geladen, wenn eine tatsächliche Leistung des Stromerzeugers kleiner als der Leistungswert ist.

Die Steuereinheit weist beispielsweise einen anwendungsspezifischen Schaltkreis (ASIC) und/oder einen Mikroprozessor auf, mittels dessen das Verfahren zumindest teilweise durchgeführt wird. Insbesondere umfasst die Steuereinheit ein Computerprogrammprodukt, das auf einem Speicher abgespeichert ist, und das bei der Ausführung des Programms durch einen Computer, wie den Mikroprozessor, diesen veranlasst, das Verfahren durchzuführen. Vorzugsweise ist die Steuereinheit im Montagezustand ein Bestandteil des Stromrichters/des Stromerzeugers oder vorzugsweise eines Verbrauchers des Stromnetzes, insbesondere einer Wärmepumpe, und ist hierfür geeignet, insbesondere vorgesehen und eingerichtet. Zum Beispiel wird mittels der Steuereinheit auch der etwaige Verbraucher, vorzugsweise die Wärmepumpe, betrieben, zweckmäßigerweise geregelt/gesteuert.

Die Erfindung betrifft ferner ein Computerprogrammprodukt. Das Computerprogrammprodukt umfasst eine Anzahl an Befehlen, die bei der Ausführung des Programms (Computerprogrammprodukts) durch einen Computer diesen veranlassen, ein Verfahren zum Betrieb eines Stromnetzes durchzuführen, das einen Gleichspannungskreis und einen Wechselspannungskreis aufweist, die elektrisch mittels eines Stromrichters verbunden sind, wobei der Wechselspannungskreis einen Versorgungsanschluss zum Anschluss an ein Versorgungsnetz aufweist, und wobei an den Gleichspannungskreis ein Energiespeicher sowie ein Stromerzeuger angeschlossen sind. Bei dem Verfahren wird eine prognostizierte Leistung einer mittels des Stromerzeugers bereitgestellten elektrischen Leistung für ein Zeitfenster ermittelt. Es wird ein Energiewert ermittelt, der zu dem Anteil der oberhalb eines Leistungswerts des Stromrichters liegenden prognostizierten Leistung korrespondiert, und ein gewünschter Ladezustand des Energiespeichers wird ermittelt, welcher zu einer maximal mittels des Energiespeichers speicherbaren Energie abzüglich des Energiewerts korrespondiert. Der Energiespeicher wird bis maximal zu dem gewünschten Ladezustand geladen, wenn eine tatsächliche Leistung des Stromerzeugers kleiner als der Leistungswert ist. Der Computer ist zweckmäßigerweise ein Bestandteil einer Steuereinheit und beispielsweise mittels dieser gebildet. Der Computer umfasst vorzugsweise einen Mikroprozessor oder ist mittels dessen gebildet. Das Computerprogrammprodukt ist beispielsweise eine Datei oder ein Datenträger, der ein ausführbares Programm enthält, das bei einer Installation auf einem Computer das Verfahren automatisch ausführt.

Die Erfindung betrifft ferner ein Speichermedium, auf dem das Computerprogrammprodukt gespeichert ist. Ein derartiges Speichermedium ist beispielsweise eine CD-ROM, eine DVD oder eine Blu-Ray Disc. Alternativ hierzu ist das Speichermedium ein USB-Stick oder ein sonstiger Speicher, der zum Beispiel wiederbeschreibbar oder lediglich einmalig beschreibbar ist. Ein derartiger Speicher ist beispielsweise ein Flash Speicher, ein RAM oder ein ROM.

Die im Zusammenhang mit dem Verfahren erläuterten Weiterbildungen und Vorteile sind sinngemäß auch auf das Stromnetz / die Steuereinheit / das Computerprogrammprodukt sowie untereinander zu übertragen und umgekehrt.

Nachfolgend wird ein Ausführungsbeispiel der Erfindung anhand einer Zeichnung näher erläutert. Darin zeigen:
- Fig. 1: schematisch ein Stromnetz, das einen Wechselspannungskreis und einen Gleichspannungskreis aufweist, an den ein Stromerzeuger und ein Energiespeicher angeschlossen sind
- Fig. 2: ein Verfahren zum Betrieb des Stromnetzes,
- Fig. 3: den zeitlichen Verlauf einer prognostizierten Leistung einer mittels des Stromerzeugers bereitgestellten elektrischen Leistung,
- Fig. 4: den zeitlichen Verlauf eines Ladezustands des Energiespeichers.

Einander entsprechende Teile sind in allen Figuren mit den gleichen Bezugszeichen versehen.

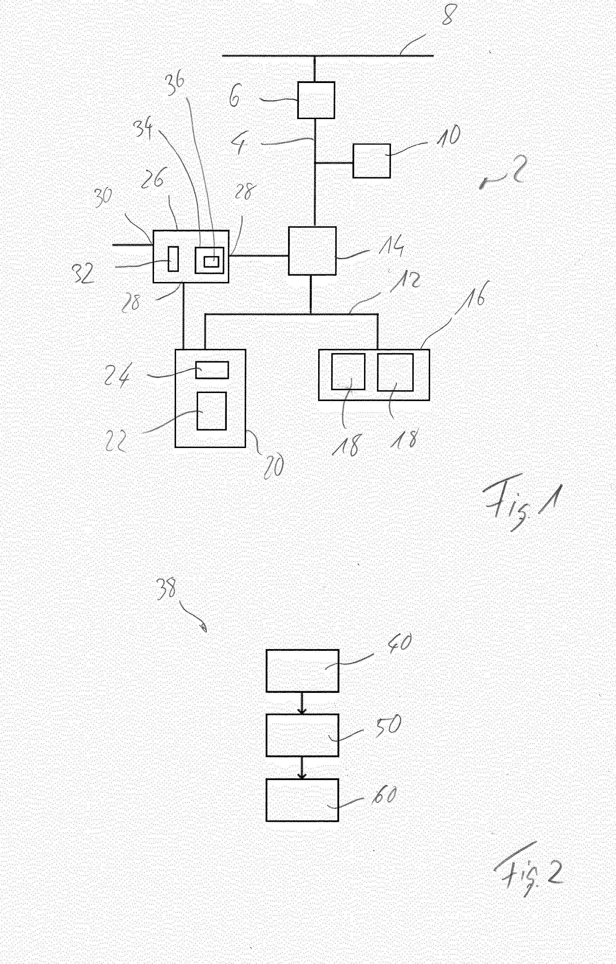

In Figur 1 ist schematisch ein Stromnetz 2 dargestellt, das ein Bestandteil eines Privathaushaltes ist. Das Stromnetz 2 weist einen Wechselspannungskreis 4 auf, mittels dessen eine dreiphasige Wechselspannung geführt wird. Jeder der Phasen weist ein zeitlich veränderliches elektrisches Potential mit einem sinusförmigen Verlauf auf. Die Höhe der elektrischen Spannung ist dabei jeweils 230 V, und die Frequenz beträgt 50 Hz. Dabei sind die drei Phasen zueinander um 120° phasenverschoben. Der Wechselspannungskreis 4 weist einen Versorgungsanschluss 6 auf, der auch als Hausanschluss oder PCC bezeichnet ist. An den Versorgungsanschluss 6 ist ein Versorgungsnetz 8 angeschlossen, mittels dessen ebenfalls eine dreiphasige Wechselspannung mit jeweils 230 V geführt wird. Hierbei ist jeder der Phasen des Versorgungsnetzes 8 mit jeweils einer der Phasen des Wechselspannungskreis 4 über den Versorgungsanschluss 6 elektrisch kontaktiert und in Phase mit dieser. Somit ist es möglich, zwischen dem Versorgungsnetz 8 und dem Wechselspannungskreis 4 elektrische Energie auszutauschen, und den Wechselspannungskreis 4 über den Versorgungsanschluss 6 mittels des Versorgungsnetzes 8 zu speisen.

Mit dem Wechselspannungskreis 4 ist ein Verbraucher 10 elektrisch kontaktiert. Der Verbraucher 10 selbst weist mehrere, nicht näher dargestellte Einheiten auf, von denen eine beispielsweise eine Wärmepumpe und eine andere eine Kaffeemaschine, ein Kühlschrank, ein Fernseher und/oder ein Kühlschrank ist. Die einzelnen Einheiten des Verbrauchers 10 sind dabei insbesondere zueinander funktional unabhängig, und als Gemeinsamkeit weisen diese lediglich auf, dass diese mittels des Wechselspannungskreises 4 betrieben sind.

Das Stromnetz 2 weist ferner einen Gleichspannungskreis 12 auf, mittels dessen bei Betrieb eine elektrische Gleichspannung geführt wird. Diese beträgt beispielsweise bis zu 60 V oder mehrere 100 V. Der Gleichspannungskreis 12 ist mittels eines Stromrichters 14 mit dem Wechselspannungskreis 4 elektrisch verbunden. In dem dargestellten Beispiel ist der Stromrichter 14 dreiphasig ausgestaltet und weist somit eine Brückenschaltung auf, nämlich eine B6-Schaltung. Diese weist drei Brückenzweige auf, wobei jeder der Brückenzweige zwischen die beiden elektrischen Potentiale des Gleichspannungskreises 12 geschaltet ist, und wobei jeder der Brückenzweige jeweils einer der Phasen des Wechselspannungskreises 4 zugeordnet ist. Der Stromrichter 14 ist als ein Wechselrichter betrieben, sodass es möglich ist, elektrische Energie aus dem Gleichspannungskreis 12 in den Wechselspannungskreis 4 zu transferieren. Zudem ist dabei der Wechselrichter 14 rückspeisefähig ausgestaltet, weswegen auch ein elektrischer Energietransfer in die entgegengesetzte Richtung, also aus dem Wechselspannungskreis 4 in den Gleichspannungskreis 12 möglich ist.

Der Stromkreis 2 weist ferner einen Stromerzeuger 16 auf, der an den Gleichspannungskreis 12 angeschlossen ist. Der Stromerzeuger 16 ist bei der dargestellten Variante als eine Photovoltaikanlage ausgestaltet und weist mehrere Photovoltaikmodule 18 auf, von denen zwei dargestellt sind. Die Photovoltaikmodule 18 sind hierbei geeignet miteinander elektrisch in Reihe und/oder parallel verschaltet, sodass mittels des Stromerzeugers 16, sofern die Photovoltaikmodule 18 mit Sonnenlicht beschienen sind, die in dem Gleichspannungskreis 12 geführte elektrische Gleichspannung bereitgestellt wird.

Der Stromkreis 2 weist ferner einen Energiespeicher 20 auf, der ebenfalls an den Gleichspannungskreis 12 angeschlossen ist und somit elektrisch mit diesem verbunden ist. Der Energiespeicher 20 umfasst eine Energiespeichereinheit 22, die als ein elektrochemischer Energiespeicher, nämlich als Batterie, insbesondere als Sekundärbatterie bzw. Akkumulator, ausgestaltet ist. Zudem umfasst der Energiespeicher 20 ein Steuergerät 24, das als Batteriemanagementsystem ausgestaltet ist, und mittels dessen ein Laden/Entladen der Energiespeichereinheit 22 gesteuert wird. Zudem umfasst der Energiespeicher 20 einen nicht näher dargestellten Aufwärts-/Abwärtswandler, mittels dessen die mittels des Energiespeichers 20 bereitgestellte elektrische Gleichspannung auf die mittels des Gleichspannungskreis 12 bereitgestellte elektrische Gleichspannung angepasst wird.

Zudem umfasst das Stromnetz 2 eine Steuereinheit 26, die zwei Anschlüsse 28 aufweist. Einer der Anschlüsse 28 ist signaltechnisch mit dem Stromrichter 14 und der andere mit dem Energiespeicher 20 verbunden, sodass es möglich ist, zwischen diesen Informationen/Daten auszutauschen. Bei einer nicht näher dargestellten Ausführungsform ist lediglich ein einziger Anschluss 28 vorhanden, mittels dessen die Steuereinheit 26 über ein Bussystem mit dem Stromrichter 14 sowie dem Energiespeicher 20 verbunden ist. Die Steuereinheit 26 umfasst ferner einen weiteren Anschluss 30, mittels dessen eine signaltechnische Verbindung mit dem Internet erfolgt.

Die Steuereinheit 26 weist einen Computer 32 in Form eines programmierbaren Mikroprozessors und ein Speichermedium in Form eines Speichers 34 auf. Auf dem Speicher 34 ist ein Computerprogrammprodukt 36 gespeichert, das mehrere Befehle umfasst, die bei der Ausführung des Programms durch den Computer 32 diesen veranlassen ein in Figur 2 dargestelltes Verfahren 38 zum Betrieb des Stromnetzes 2 auszuführen. Mit anderen Worten ist das Stromnetz 2 gemäß dem Verfahren 38 betrieben, und die Steuereinheit 24 ist vorgesehen und eingerichtet, das Verfahren 38 durchzuführen.

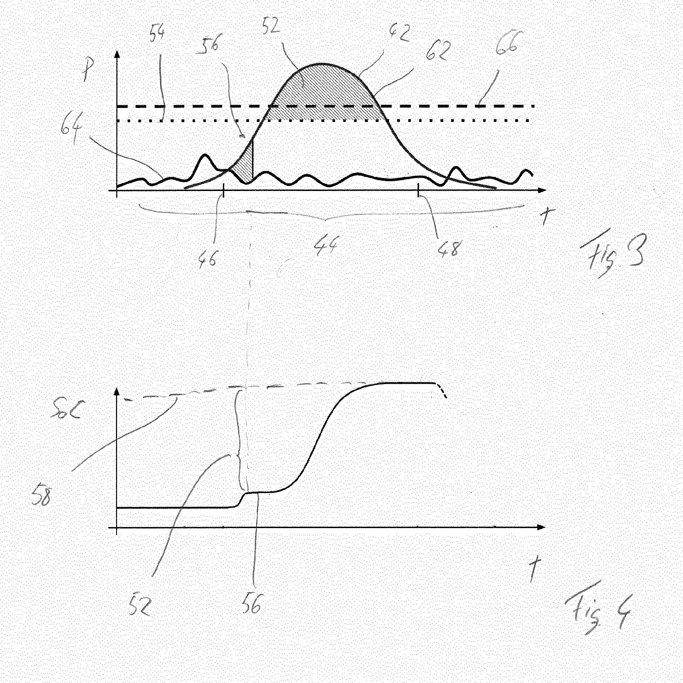

Bei dem Verfahren 38 wird in einem ersten Arbeitsschritt 40 eine prognostizierte Leistung 42 einer mittels des Stromerzeugers 16 bereitgestellten elektrischen Leistung für ein Zeitfenster 44 ermittelt. Die Länge des Zeitfenster 44 beträgt hierbei 24 Stunden, und die prognostizierte Leistung 42 weist über das Zeitfenster 44 eine variierende Höhe auf, wie in Figur 3 dargestellt. So ist während einer Nachtphase die prognostizierte Leistung 42 im Wesentlichen 0 W. Bis zu einem Sonnenaufgang 46 nimmt die prognostizierte Leistung 42 geringfügig zu, um dann vergleichsweise stark bis zu einer Mittagszeit anzusteigen. Nachfolgend sinkt die prognostizierte Leistung 42 bis zu einem Sonnenuntergang 48 vergleichsweise stark ab und sinkt danach kontinuierlich weiter.

Die prognostizierte Leistung 42 wird anhand einer Prognose für das Wetter ermittelt. Hierfür wird mittels der Steuereinheit 26 über den weiteren Anschluss 30 eine Strahlungsprognose von einem Wetterdienst abgerufen und anhand dieser der zeitliche Verlauf der prognostizierten Leistung 42 ermittelt. Bei dem dargestellten Beispiel ist in der Prognose enthalten, dass keine Bewölkung vorhanden sein wird, sodass ein im Wesentlichen kontinuierlicher Anstieg und Abfall der prognostizierten Leistung 42 vorhanden ist. Die auf dies Weise ermittelte prognostizierte Leistung 42 wird anhand von mittels des Stromerzeugers 16 bereits realisierten tatsächlichen Leistungen angepasst. Somit wird die prognostizierte Leistung 42 auch anhand von realisierten tatsächlichen Leistungen ermittelt. Auf diese Weise werden insbesondere Alterungseffekte berücksichtigt. Zum Beispiel werden die um das damals vorherrschende Wetter bereinigte tatsächliche Leistung der fünf vorhergehenden Zeiträume ermittelt, und der Mittelwert hiervon entspricht insbesondere der prognostizierten Leistung 42.

In einem nachfolgenden zweiten Arbeitsschritt 50 wird ein Energiewert 52 ermittelt. Der Energiewert 52 korrespondiert dabei zu dem Anteil der oberhalb eines Leistungswerts 54 des Stromrichters 14 liegenden prognostizierten Leistung 42. Der Leistungswert 54 ist von dem Hersteller des Stromrichters 14 vorgegeben und entspricht der Maximalleistung, mittels derer der Stromrichter 14 betrieben werden kann. Der Energiewert 52 korrespondiert zu dem zeitlichen Integral des Anteils der prognostizierten Leistung 42, der oberhalb des Leistungswerts 54 liegt. Der Energiewert 52 wird dabei mittels eines mathematischen Optimierungsverfahrens bestimmt, sodass kein vergleichsweise kompliziertes und langwieriges Integrationsverfahren durchgeführt werden muss.

Ferner wird in dem zweiten Arbeitsschritt 50 ein gewünschter Ladezustand 56 des Energiespeichers 20 ermittelt. Der gewünschte Ladezustand 56 korrespondiert dabei zu einem Ladezustand ("State of Charge"; SoC), der gleich der maximal mittels des Energiespeichers 20 speicherbaren Energie 58 abzüglich des Energiewerts 52 ist. In dem dargestellten Beispiel entspricht der gewünschte Ladezustand 56 genau diese Differenz. Bei einer alternativen Ausgestaltungsform ist der gewünschte Ladezustand 56 prozentual angegeben, und auf die maximale speicherbare Energie 58 bezogen. Die maximale speicherbare Energie 58 ist dabei aufgrund der Konstruktion des Energiespeichers 20 vorgegeben und kann sich aufgrund von Alterungseffekten ändern.

Der erste und zweite Arbeitsschritt 40, 50 werden zu oder vor Beginn des Zeitfensters 40 durchgeführt. Wenn das Zeitfenster 44 begonnen hat, wird ein dritter Arbeitsschritt 60 durchgeführt. In diesem wird die mittels des Stromerzeugers 42 bereitgestellte tatsächliche Leistung 62 ermittelt. Hierfür werden insbesondere Messdaten des Stromerzeugers 16 abgerufen. In dem dargestellten Beispiel stimmt die tatsächliche Leistung 62 mit der prognostizierten Leistung 42 im Wesentlichen überein. Jedoch ist es auch möglich, dass diese voneinander abweichen, insbesondere, sofern sich lokal das Wetter ändert und/oder sonstige Umweltbedingungen im Vergleich zur Annahme beim Ermitteln der prognostizierten Leistung 42 verändert sind.

Während des Zeitfensters 44 wird ferner eine von dem Verbraucher 10 benötigte Leistung 64 ermittelt. Diese ist während des Zeitfensters 44 nicht konstant, und zum Beispiel abhängig von einer Bedienung durch einen Nutzer des Verbrauchers 10. Falls, wie in dem dargestellten Beispiel, der Energiespeicher 20 zunächst vergleichsweise wenig geladen ist, wird die für den Betrieb des Verbrauchers 10 benötigte Leistung 64 über den Versorgungsanschluss 6 aus dem Versorgungsnetz 8 bezogen. Sobald die tatsächliche Leistung 62 ansteigt, wird der diese für den Betrieb des Verbrauchers 10 verwendet, wobei lediglich noch die Differenz zwischen der tatsächlichen Leistung 62 und der benötigten Leistung 64 aus dem Versorgungsnetz 8 entnommen wird. Während dieser Zeit erfolgt kein Laden des Energiespeichers 20, und die tatsächliche Leistung 62 wird vollständige mittels des Stromrichters 14 in den Wechselspannungskreis 4 eingespeist.

Erst wenn die tatsächliche Leistung 62 die benötigte Leistung 64 übersteigt, wird der Überschuss zum Laden des Energiespeichers 20 verwendet. Somit wird der Energiespeicher 20 lediglich dann geladen, wenn die tatsächliche Leistung 62 größer als die benötigte Leistung 64 ist. Dabei wird der Energiespeicher 20 lediglich bis zu dem gewünschten Ladezustand 56 geladen. Zusammenfassend wird der Energiespeicher 20 bis maximal zu dem gewünschten Ladezustand 56 geladen, wenn die tatsächliche Leistung 62 des Stromerzeugers 16 kleiner als der Leistungswert 54 ist. Nachfolgend wird, solange die tatsächliche Leistung 62 unterhalb des Leistungswerts 54 liegt, mittels des Stromrichters 14 die vollständige tatsächliche Leistung 62 in den Wechselspannungskreis 4 eingespeist. Der über die benötigte Leistung 64 hinausgehende Anteil wird von dort über den Versorgungsanschluss 6 in das Versorgungsnetz 8 eingespeist.

Wenn die tatsächliche Leistung 62 den Leistungswert 54 erreicht und darüber ansteigt, wird der Stromrichter 14 mit dem Leistungswert 54 betrieben, also mit dessen maximaler Leistung. Infolgedessen wird eine zu dem Leistungswert 54 korrespondierende Leistung in das Wechselstromnetz 4 eingespeist. Von dort wird auch weiterhin der über die benötigte Leistung 64 hinausgehende Anteil in das Versorgungsnetz 8 eingespeist. Die in dem Gleichspannungskreis 12 vorhandene Differenz zwischen der tatsächlichen Leistung 62 und dem Leistungswert 54 wird zum Laden des Energiespeicher 20 verwendet. Da dieser bis dahin lediglich bis zu dem gewünschten Ladezustand 56 geladen wurde, ist dort noch ausreichend Kapazität vorhanden, um diese aufzunehmen, und zwar über das vollständige Zeitfenster 44. Mit anderen Worten wird somit, da bei dem dargestellten Beispiel die tatsächliche Leistung 62 mit der prognostizierten Leistung 42 übereinstimmt, zusätzlich eine elektrische Energie in Höhe des Energiewerts 52 in den Energiespeicher 20 gespeichert. Somit wird auch bei einem vergleichsweise klein dimensionierten Stromrichter 14 ein Abregeln des Stromerzeugers 16 vermieden.

Solange die tatsächliche Leistung 62 oberhalb des Leistungswert 54 ist, wird die Begrenzung des Ladens bis maximal zu dem gewünschten Ladezustand 56 aufgehoben, und die Differenz zwischen der tatsächlichen Leistung 62 und dem Leistungswert 54 wird zum Laden des Energiespeichers 20 verwendet. Wenn die tatsächliche Leistung 62 unter den Leistungswert 54 fällt, was während des Zeitfensters 44 mehrmals erfolgen kann, zum Beispiel wenn lokal eine Bewölkung vorherrscht, wird der dann herrschende Ladezustand des Energiespeichers 20 als neuer gewünschter Ladezustand 56 herangezogen.

Während des dritten Arbeitsschritts 60, der die Dauer des Zeitfensters 44 durchgeführt wird, wird überwacht, ob die mittels des Stromrichters 14 in dem Wechselspannungskreis 4 bereitgestellte Leistung, die dem Minimum aus der tatsächlichen Leistung 62 und dem Leistungswert 54 entspricht, größer als eine für den Versorgungsanschluss 6 geltende Leistungsbegrenzung 66 ist. Bei einer Abwandlung wird dabei zudem noch die benötigte Leistung 64 berücksichtigt. In dem dargestellten Beispiel ist die Leistungsbegrenzung 66 stets größer als der Leistungswert 54, jedoch ist es möglich, dass von dem Betreiber des Versorgungsnetz 8 die Leistungsbegrenzung 66 während des Zeitfensters 44 abgesenkt wird. In diesem Fall wird der Stromrichter 14 mit verringerter Leistung betrieben, insbesondere mit einer zu der Leistungsbegrenzung 66 korrespondierenden Leistung. Zudem wird der Energiespeicher 20 geladen. Falls dieser bereits bis zu dem Ladezustand 56 geladen wurde, wird die Begrenzung aufgehoben, und somit zusätzliche Energie in dem Energiespeicher 20 gespeichert.

Wenn die tatsächliche Leistung 62 unter die benötigte Leistung 64 abfällt, wird der Energiespeicher 20 entladen und der Stromrichter 14 wird mit einer Leistung betrieben, die zu der benötigten Leistung 64 korrespondiert. Somit ist ein Betrieb des Verbrauchers 10 möglich, ohne dass hierfür elektrische Energie aus dem Versorgungsnetz 8 abgerufen werden muss. Wenn das Zeitfenster 44 verstrichen ist, oder kurz vor Ablauf des Zeitfensters 44 wird das Verfahren 38 für das sich anschließende Zeitfenster 44, also für die nächsten 24 Stunden, erneut durchgeführt.

Bei einer Weiterbildung wird zudem während des Zeitfensters 44 die prognostizierte Leistung 42 kontinuierlich oder mehrmalig angepasst. Dabei wird der Mittelwert der tatsächlichen Leistung 42 für einen Zeitbereich ermittelt. Der Zeitbereich entspricht dabei den 15 Minuten vor dem Zeitpunkt, zu dem das Anpassen der prognostizierten Leistung 42 erfolgt. Ausgehend von dem Mittelwert und der dann noch nicht angepassten prognostizierten Leistung 42 wird mittels einer Spline-Interpolation die prognostizierte Leistung 42 für einen weiteren Zeitbereich angepasst, nämlich 1 Stunde. Somit wird eine Genauigkeit der prognostizierten Leistung 42 erhöht, und diese wird dynamisch an sich ändernde Umweltbedingungen angepasst. Anhand der angepassten prognostizierten Leistung 42 wird auch der Energiewert 52 und der gewünschte Ladezustand 56 angepasst. Somit kann der Stromerzeuger 16 im Wesentlichen stets mit dessen zu dem jeweiligen Zeitpunkt maximal möglichen Leistung betrieben werden, und ein Abregeln ist vermieden.

Die Erfindung ist nicht auf das vorstehend beschriebene Ausführungsbeispiel beschränkt. Vielmehr können auch andere Varianten der Erfindung von dem Fachmann/Fachleuten hieraus abgeleitet werden, ohne den Gegenstand der Erfindung zu verlassen. Insbesondere sind ferner alle im Zusammenhang mit dem Ausführungsbeispiel beschriebene Einzelmerkmale auch auf andere Weise miteinander kombinierbar, ohne den Gegenstand der Erfindung zu verlassen.

### Bezugszeichenliste

- 2: Stromnetz
- 4: Wechselspannungskreis
- 6: Versorgungsanschluss
- 8: Versorgungsnetz
- 10: Verbraucher
- 12: Gleichspannungskreis
- 14: Stromrichter
- 16: Stromerzeuger
- 18: Photovoltaikmodul
- 20: Energiespeicher
- 22: Energiespeichereinheit
- 24: Steuergerät
- 26: Steuereinheit
- 28: Anschluss
- 30: weiterer Anschluss
- 32: Computer
- 34: Speicher
- 36: Computerprogrammprodukt
- 38: Verfahren
- 40: erster Arbeitsschritt
- 42: prognostizierte Leistung
- 44: Zeitfenster
- 46: Sonnenaufgang
- 48: Sonnenuntergang
- 50: zweiter Arbeitsschritt
- 52: Energiewert
- 54: Leistungswert
- 56: gewünschter Ladezustand
- 58: maximale speicherbare Energie
- 60: dritter Arbeitsschritt
- 62: tatsächliche Leistung
- 64: benötigte Leistung
- 66: Leistungsbegrenzung

## Patentansprüche

1. Verfahren (38) zum Betrieb eines Stromnetzes (2), das einen Gleichspannungskreis (12) und einen Wechselspannungskreis (4) aufweist, die elektrisch mittels eines Stromrichters (14) verbunden sind, wobei der Wechselspannungskreis (4) einen Versorgungsanschluss (6) zum Anschluss an ein Versorgungsnetz (8) aufweist, und wobei an den Gleichspannungskreis (12) ein Energiespeicher (20) sowie ein Stromerzeuger (16) angeschlossen sind, bei welchem
- eine prognostizierte Leistung (42) einer mittels des Stromerzeugers (16) bereitgestellten elektrischen Leistung für ein Zeitfenster (44) ermittelt wird,
- ein Energiewert (52) ermittelt wird, der zu dem Anteil der oberhalb eines Leistungswerts (54) des Stromrichters (14) liegenden prognostizierten Leistung (42) korrespondiert,
- ein gewünschter Ladezustand (56) des Energiespeichers (20) ermittelt wird, welcher zu einer maximal mittels des Energiespeichers (20) speicherbaren Energie (58) abzüglich des Energiewerts (52) korrespondiert, und
- der Energiespeicher (20) bis maximal zu dem gewünschten Ladezustand (56) geladen wird, wenn eine tatsächliche Leistung (62) des Stromerzeugers (16) kleiner als der Leistungswert (54) ist.

2. Verfahren (38) nach Anspruch 1,
**dadurch gekennzeichnet,**
**dass**, wenn die tatsächliche Leistung (62) des Stromerzeugers (16) größer als der Leistungswert (54) ist, der Stromrichter (14) mit dem Leistungswert (54) betrieben und der Energiespeicher (20) geladen wird.

3. Verfahren (38) nach Anspruch 1 oder 2,
**dadurch gekennzeichnet,**
**dass**, wenn eine mittels des Stromrichters (14) in dem Wechselspannungskreis (4) bereitgestellte Leistung größer als eine für den Versorgungsanschluss (6) geltende Leistungsbegrenzung (66) ist, der Stromrichter (14) mit verringerter Leistung betrieben und der Energiespeicher (20) geladen wird.

4. Verfahren (38) nach einem der Ansprüche 1 bis 3,
**dadurch gekennzeichnet,**
**dass** eine von einem Verbraucher (10), der an den Wechselspannungskreis (4) angeschlossen ist, benötigte Leistung (64) ermittelt wird, und dass der Energiespeicher (20) lediglich geladen wird, wenn die tatsächliche Leistung (62) größer als die benötigte Leistung (64) ist.

5. Verfahren (38) nach einem der Ansprüche 1 bis 4,
**dadurch gekennzeichnet,**
**dass** als Zeitfenster (44) 24 Stunden gewählt werden.

6. Verfahren (38) nach einem der Ansprüche 1 bis 5,
**dadurch gekennzeichnet,**
**dass** die prognostizierte Leistung (42) anhand von realisierten tatsächlichen Leistungen ermittelt wird.

7. Verfahren (38) nach einem der Ansprüche 1 bis 6,
**dadurch gekennzeichnet,**
**dass** die prognostizierte Leistung (42) anhand einer Prognose für das Wetter ermittelt wird.

8. Stromnetz (2), das einen Gleichspannungskreis (12), an den ein Energiespeicher (20) sowie ein Stromerzeuger (16) angeschlossen sind, und einen Wechselspannungskreis (4) aufweist, der einen Versorgungsanschluss (6) zum Anschluss an ein Versorgungsnetz (8) aufweist, wobei der Gleichspannungskreis (12) und der Wechselspannungskreis (4) mittels eines Stromrichters (14) elektrisch verbunden sind, und das gemäß einem Verfahren (38) nach einem der Ansprüche 1 bis 7 betrieben ist.

9. Steuereinheit (26), die einen Anschluss (28) zur signaltechnischen Verbindung mit einem Stromrichter (14) und/oder einem Energiespeicher (20) aufweist, und die vorgesehen und eingerichtet ist, ein Verfahren (38) nach einem der Ansprüche 1 bis 7 durchzuführen.

10. Computerprogrammprodukt (36), umfassend Befehle, die bei der Ausführung des Programms durch einen Computer (32) diesen veranlassen, ein Verfahren (38) nach einem der Ansprüche 1 bis 7 auszuführen.
